# EUROPÄISCHE PATENTSCHRIFT

(11) **EP 2 987 764 B1**
(45) Veröffentlichungstag und Bekanntmachung des Hinweises auf die Patenterteilung: **19.09.2018**
(21) Anmeldenummer: 14181650.4
(22) Anmeldetag: 20.08.2014
(51) Int. Cl.: B67B 3/00, B65G 47/84, B65B 3/02, B67C 7/00

(54) **Überschwappvermeidung bei Formfüllmaschinen**
Spill prevention for mould filling machines
Dispositif destiné à éviter les débordements pour des remplisseuses de moule

(43) Veröffentlichungstag der Anmeldung: 24.02.2016
(73) Patentinhaber: Krones AG, 93073 Neutraubling (DE)
(72) Erfinder: Frankenberger, Guenter, 93073 Neutraubling (DE); Wels, Harald, 93073 Neutraubling (DE); Albrecht, Thomas, 93073 Neutraubling (DE)
(74) Vertreter: Grünecker Patent- und Rechtsanwälte PartG mbB

(56) Entgegenhaltungen:
- EP-A1- 2 179 960
- EP-B1- 1 529 620
- WO-A1-98/55390
- WO-A1-2011/007370
- WO-A1-2013/117492
- DE-A1-102011 115 512
- JP-A- 2009 269 660

## Beschreibung

### Gebiet der Erfindung

Die Erfindung betrifft eine Formfüllmaschine zum Ausformen und Füllen eines Kunststoffbehälters mit einer Flüssigkeit in einer Behandlungsstation.

### Stand der Technik

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner ein Fluid oder dergleichen unter Überdruck eingeleitet, um die endgültige Behälterform herzustellen. Das Fluid entspricht der im Behälter zu verbleibenden Flüssigkeit und verbleibt somit im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Nach dem Formen und Befüllen der Behälter mit dem Produkt in der Behandlungsstation muss ein befüllter Behälter aus dem Karussell herausbefördert werden. Auslaufsysteme nach dem Stand der Technik arbeiten mit einem klassischen Transferstern. Alternativ kann auch ein Teilungsverzugsstern verwendet werden. Aufgrund der großen Teilung und der damit verbundenen Geschwindigkeit tritt im Vergleich zu einem klassischen Füllerauslauf verstärkt die Problematik eines Überschwappens des Produkts beim Übergeben bzw. kurz nach dem Übergeben in den Auslaufstern auf. WO 2013/117492 A1 beschreibt eine Formfüllmaschine gemäß dem Oberbegriff von Anspruch 1.

### Beschreibung der Erfindung

Es ist Aufgabe der Erfindung, diese Nachteile nach dem Stand der Technik zu überwinden und ein Überschwappen des Produkts zu vermeiden.

Diese Aufgabe wird gelöst durch eine Formfüllmaschine nach Patentanspruch 1. Vorteilhafte Ausführungsformen der Erfindung sind in den Unteransprüchen definiert.

Die Formfüllmaschine ist zum Ausformen und Füllen eines Kunststoffvorformlings mit einer Flüssigkeit in einer Behandlungsstation vorgesehen und ist gekennzeichnet durch eine Schwappschutzvorrichtung, die zur Vermeidung von Überschwappen einer Flüssigkeit aus dem Behälter beim Übergang des mit der Flüssigkeit gefüllten Behälters aus der Behandlungsstation der Formfüllmaschine in eine Auslaufvorrichtung, insbesondere einen Auslaufstern, geeignet ist. Demnach ist die Schwappschutzvorrichtung so ausgebildet, dass ein Schwappen der Flüssigkeit in dem Behälter aus der Öffnung des Behälters aufgrund von Richtungsänderungen in der Bahn des Behälters und daraus resultierenden Beschleunigungskräften vermieden wird.

Die Schwappschutzvorrichtung kann als Alternative und kein Teil der Erfindung eine Verschlussvorrichtung zum Aufbringen eines Verschlusses, insbesondere eines Vorverschlusses, auf die Mündung des in der Behandlungsstation geformten und mit der Flüssigkeit gefüllten Behälters umfassen. Mit der Verschlussvorrichtung wird nach Ausformen und Befüllen des Behälters ein Verschluss mittels der Verschlussvorrichtung auf die Mündung des gefüllten Behälters aufgebracht, wodurch ein Herausschwappen der Flüssigkeit bei der Übergabe in die Auslaufvorrichtung vermieden wird.

Der Verschluss kann wenigstens eine Gasaustauschöffnung aufweisen, wobei die wenigstens eine Gasaustauschöffnung vorzugsweise in Form eines Schlitzes an einem Rand des Verschlusses und/oder in Form eines sternförmigen oder kreuzförmigen Schlitzes in dem Verschluss, insbesondere in der Mitte des Verschlusses, vorgesehen ist. Der Verschluss ist im Sinne eines Vorverschlusses zu verstehen, der auf die Mündung aufgesetzt wird. Wenn mit einem heißen Produkt geblasen wird und sich die Flüssigkeit auf dem Transport in der Behandlungsstation abkühlt, entsteht ein kleinerer Unterdruck, der den Verschluss auf der Mündung hält. Der Verschluss weist vorzugsweise kleine Lüftungs- oder Atmungsöffnungen bzw. Lüftungsschlitze auf, durch die - abgestimmt auf die Blastemperatur und die Behälterfestigkeit - ein definierter Gasaustausch beim Abkühlen zugelassen wird, damit der Behälter durch den entstehenden Unterdruck nicht kollabiert. Ein derartiger Verschluss im Sinne eines Vorverschlusses kann vor dem Anbringen des endgültigen Verschlusses wieder abgenommen werden und zur Formfüllmaschine zurückgeführt werden oder auch auf dem Behälter verbleiben, welcher dann mit einer endgültigen Verschlusskappe verschlossen wird.

Der Verschluss kann als Kappe ausgebildet sein oder der Verschluss kann eine Folie umfassen, die mit der Verschlussvorrichtung auf die Mündung aufschweißbar oder aufklebbar ist, oder der Verschluss kann einen Stopfen umfassen, der in die Mündung eingedrückt wird.

Die Schwappschutzvorrichtung kann als weitere Alternative und kein Teil der Erfindung wenigstens einen Schwenkhalter zur schwenkbaren Halterung des Behälters im Auslaufstern mit einer Neigung gegenüber der Vertikalen umfassen. Da die Formfüllmaschine immer mit der gleichen Geschwindigkeit läuft, ist die Art und Ausprägung der Flüssigkeitsoberfläche für ein jeweiliges Produkt immer nahezu identisch. Anhand dieser spezifischen Ausprägung kann mittels eines Auslaufsterns, in dem der Behälter definiert mit einer Neigung der sich einstellenden Flüssigkeitsoberfläche mitschwenkt, ein Überschwappen verhindert werden.

Dies kann dahingehend weitergebildet werden, dass eine Steuervorrichtung zum Ausgeben eines Steuersignals für die Steuerung der Neigung des Schwenkhalters entlang eines Auslaufwegs des Auslaufsterns und/oder eine Kamera zum Überwachen und Nachregeln der Neigung vorgesehen sind.

Alternativ kann sich die Neigung aufgrund der auf dem Behälter wirkenden Zentripetal- und Gravitationskraft einstellen, oder die Neigung kann entlang eines Auslaufwegs der Auslaufvorrichtung aufgrund einer mechanischen Führung im Auslaufstern vorgegeben sein.

Die Schwappschutzvorrichtung kann einen von der Kreisbahn abweichenden Auslaufweg der Behälter in der Auslaufvorrichtung, insbesondere mit einem von einem Übergabepunkt zwischen Behandlungsstation und Auslaufvorrichtung in tangentialer Richtung verlaufenden Teilstücks des Auslaufwegs umfassen. Auf diese Weise wird vermieden, dass die in der Behandlungsstation wirkende Zentripetalkraft bei der Übergabe momentan in eine entgegengesetzte Zentripetalkraft im Auslaufstern umgesetzt wird, wodurch ein Schwappen verringert wird. Besonders bevorzugt ist ein allmählicher Übergang von der Krümmung der Kreisbahn in der Behandlungsstation in eine gegenläufige Krümmung des Auslaufwegs. Mit anderen Worten, der Auslaufweg verläuft nach dem Übergabepunkt noch teilweise mit einer Krümmungsrichtung wie vor der Übergabe.

Eine alternative und nicht zur Erfindung gehörende Schwappschutzvorrichtung kann beispielsweise dadurch realisiert werden, dass die Schwappschutzvorrichtung weiterhin wenigstens einen um einen Drehpunkt drehbar angeordneten Halter für den Behälter umfasst, wobei ein Abstand des gehalterten Behälters und des Drehpunkts variabel ist, insbesondere mittels eines längenveränderlichen Verbindungselements. Dies entspricht einem Mehrachsenauslaufstern mit veränderlichem Radius.

Erfindungsgemäß umfasst die Auslaufvorrichtung mehrere Einzelschlitten für die jeweilige Aufnahme eines Behälters, wobei die Einzelschlitten auf wenigstens einer Führungsschiene angeordnet sind, und wobei bevorzugt die Geschwindigkeiten der Einzelschlitten jeweils separat steuerbar sind. Auf diese Weise kann jeder Einzelschlitten entlang der vorgegebenen Bahn fahren (vorzugsweise einzeln angetrieben oder über einen Riemen oder eine Kette verbunden). Dabei kann nicht nur der Bahnverlauf sondern auch der Geschwindigkeits- und Beschleunigungsverlauf angepasst und variabel sein. Auf diese Weise lässt sich die auf die Flüssigkeit im Behälter wirkende Zentrifugalkraft, insbesondere deren Maximalwerte im Verlauf der Auslaufbahn, minimiert werden.

### Zeichnungen

- Fig. 1: zeigt eine Formfüllmaschine nach dem Stand der Technik
- Fig. 2: zeigt einen Querschnitt durch eine Behandlungsstation der Formfüllmaschine nach Fig. 1.
- Fig. 3: zeigt einen Querschnitt einer Flaschenmündung mit aufgesetztem Vorverschluss.
- Fig. 4: zeigt den Vorverschluss nach Fig. 3 mit vertikalen Entgasungsschlitzen am Umfang.
- Fig. 5: zeigt den Vorverschluss nach Fig. 3 mit sternförmigen bzw. kreuzförmigen Entlastungsschlitzen in der Verschlussmitte.
- Fig. 6: zeigt den Querschnitt einer Flaschenmündung mit aufgeschweißter Folie.
- Fig. 7: zeigt das Konzept einer Auslaufvorrichtung mit pendelnden Behältern.
- Fig. 8: zeigt einen Querschnitt durch die Auslaufvorrichtung nach Fig. 7.
- Fig. 9: zeigt einen bahnoptimierten Behälterauslauf in der Auslaufvorrichtung.
- Fig. 10: zeigt einen Mehrachsenauslaufstern.
- Fig. 11: zeigt ein Einzelschlittensystem.
- Fig. 12: zeigt ein Weg-Geschwindigkeitsdiagramm mit optimiertem Kurvenverlauf.

### Ausführungsformen

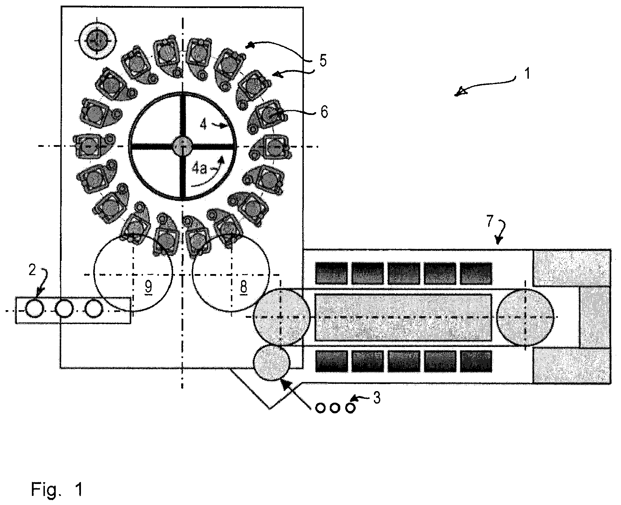

Fig. 1 zeigt eine Formfüllmaschine 1 nach dem Stand der Technik.

Als Bestandteile der Formfüllmaschine sind gezeigt: Behälter 2, Vorformling 3, Karussell 4 (mit kontinuierlicher Transportbewegung 4a), Behandlungsstation 5, Hohlform 6, Ofen 7, Einlaufstern 8 und Auslaufstern 9.

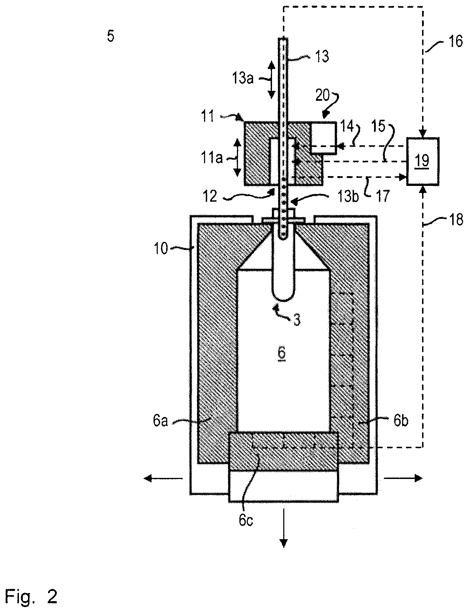

Fig. 2 zeigt die Behandlungsstation 5 der Formfüllmaschine 1 nach Fig. 1 im Detail.

Die Behandlungsstation 5 umfasst: Formteile 6a-6c der Hohlform 6, einen mehrteiligen Formträger 10, Ventilkopf 11 (mit einem Hub 11a der Ventileinheit bezüglich der Hohlform), Fluiddüse 12 (entsprechend einer Blasdüse), eine Reckstange 13 (mit Kanal), wobei ein Hub der Reckstange bezüglich der Ventileinheit mit 13a bezeichnet ist, und wobei Öffnungen (für Absaugung des Formfluids, gegebenenfalls auch für Versorgung mit Formfluid/Produktkomponenten) mit 13b bezeichnet sind, eine Zuleitung 14 für das Formfluid (mit Ventil), eine Zuleitung 15 für das Produkt (mit Ventil), eine hydraulische Absaugleitung 16 für das Formfluid (mit Ventil), eine pneumatische Absaugleitung 17 für den Innenraum des Behälters beim Füllen (mit Ventil), eine pneumatische Absaugleitung 18 für die Hohlform/Außenseite des Behälters beim Füllen (mit Ventil), einen Medienverteiler 19 (gemeinsamer Drehverteiler für die Behandlungsstationen), und einem Kompressor 20 für das Formfluid.

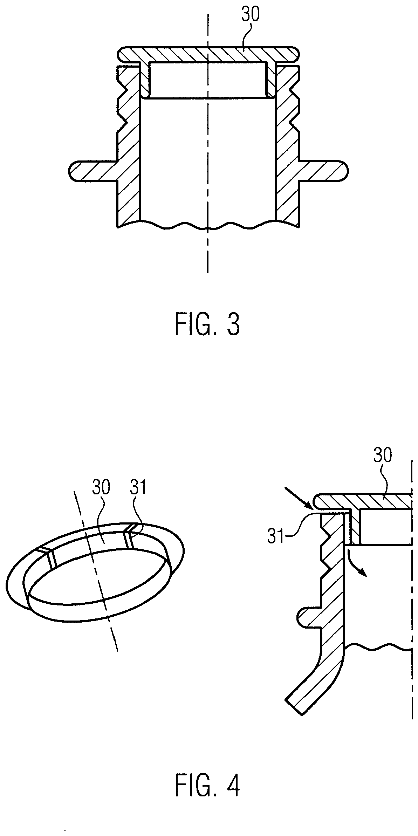

Fig. 3 zeigt einen Querschnitt einer Flaschenmündung mit aufgesetztem Vorverschluss 30. Der Vorverschluss 30 wird nach Ausformen und Befüllen des Behälters ein Verschluss mittels der Verschlussvorrichtung auf die Mündung des gefüllten Behälters aufgebracht, wodurch ein Herausschwappen der Flüssigkeit bei der Übergabe in die Auslaufvorrichtung vermieden wird. Da mit einem heißen Produkt geblasen wird und sich die Flüssigkeit auf dem Transport in der Behandlungsstation abkühlt, entsteht ein kleinerer Unterdruck, der den Verschluss auf der Mündung hält.

Fig. 4 zeigt den Vorverschluss nach Fig. 3 mit vertikalen Entgasungsschlitzen 31 am Umfang.

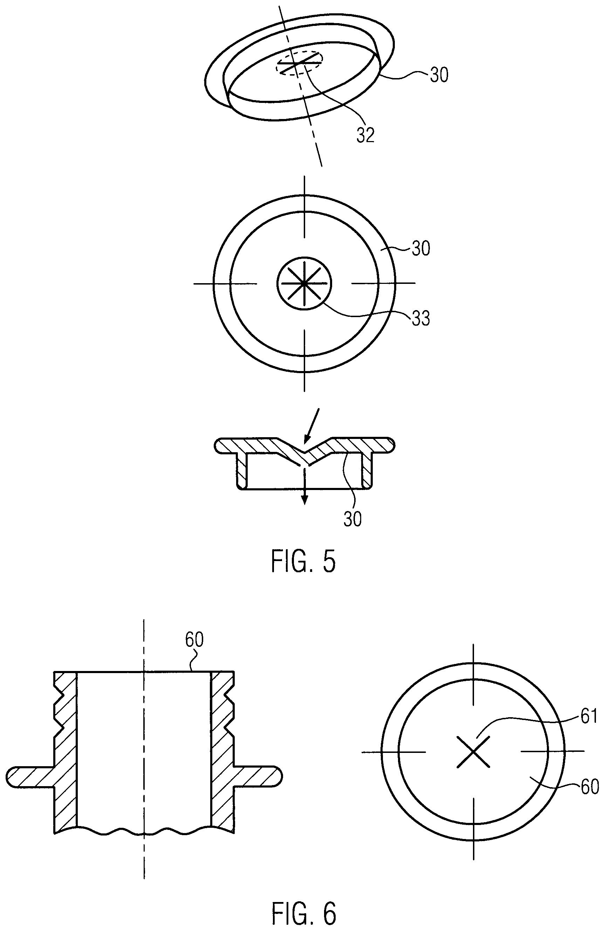

Fig. 5 zeigt den Vorverschluss nach Fig. 3 mit sternförmigen bzw. kreuzförmigen Entlastungsschlitzen 33 bzw. 32 in der Verschlussmitte. Der Verschluss weist hier kleine Lüftungsöffnungen bzw. Lüftungsschlitze auf, durch die ein Gasaustausch beim Abkühlen zugelassen wird, damit der Behälter durch den entstehenden Unterdruck nicht kollabiert. Ein derartiger Verschluss im Sinne eines Vorverschlusses kann vor dem Anbringen des endgültigen Verschlusses wieder abgenommen werden und zum Füllerauslauf zurückgeführt werden oder auf dem Behälter verbleiben.

Fig. 6 zeigt den Querschnitt einer Flaschenmündung mit einer aufgeschweißten Folie 60. Die Folie kann beispielsweise kreuzförmige Entgasungsschlitze 61 aufweisen

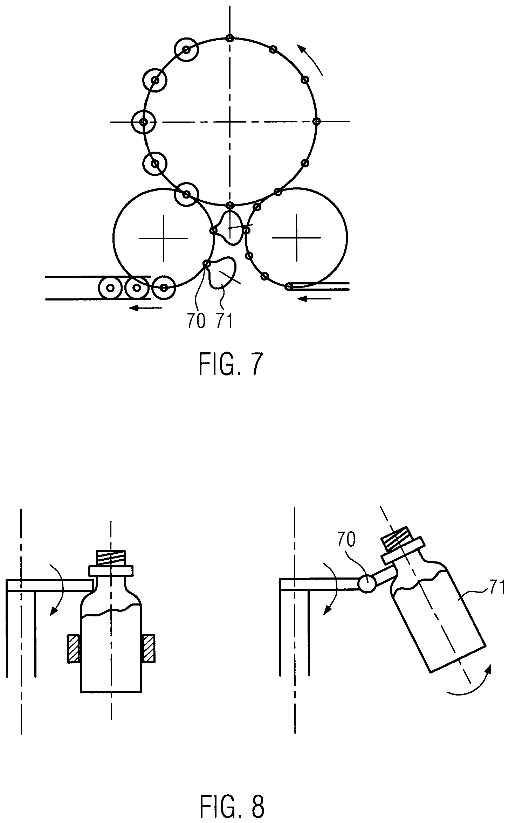

Fig. 7 zeigt das Konzept einer Auslaufvorrichtung in Form eines Auslaufsterns mit einer Schwenkhalterung 70 der Behälter 71.

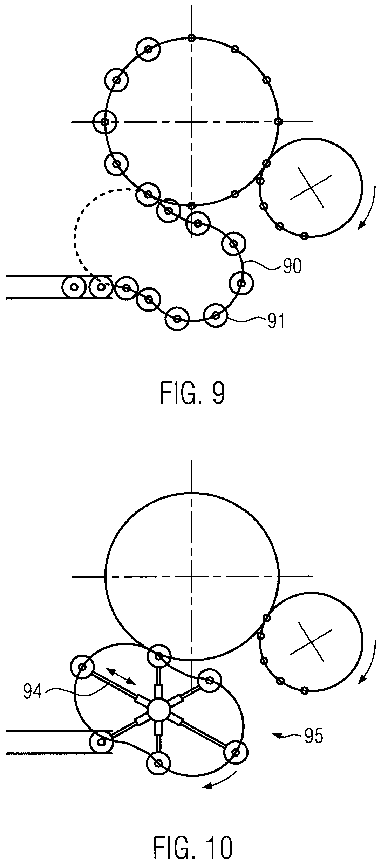

Fig. 8 zeigt rechts einen Querschnitt durch die Auslaufvorrichtung nach Fig. 7. Auf der linken Seite von Fig. 8 ist die schräge Flüssigkeitsoberfläche in einem Auslaufstern nach dem Stand der Technik angedeutet. Da die Formfüllmaschine immer mit der gleichen Geschwindigkeit läuft, ist die Art und Ausprägung der Flüssigkeitsoberfläche für ein jeweiliges Produkt immer nahezu identisch. Anhand dieser spezifischen Ausprägung kann mittels eines Auslaufsterns, in dem der Behälter definiert mit einer Neigung der sich einstellenden Flüssigkeitsoberfläche mitschwenkt, ein Überschwappen verhindert werden. Die Neigung kann sich aufgrund der auf dem Behälter wirkenden Zentripetal- und Gravitationskraft einstellen, oder die Neigung kann entlang eines Auslaufwegs der Auslaufvorrichtung aufgrund einer mechanischen Führung im Auslaufstern vorgegeben sein. Weiterhin kann eine Steuervorrichtung zum Ausgeben eines Steuersignals für die Steuerung der Neigung des Schwenkhalters entlang eines Auslaufwegs des Auslaufsterns sowie zusätzlich oder alternativ eine Kamera zum Überwachen der Neigung vorgesehen sein. Die Ansteuerung kann somit vollautomatisch anpassbar in Form einer elektrischen Kurve und bei Bedarf über eine Kameratechnik sogar in Echtzeit nachregelbar erfolgen. Fig. 9 zeigt einen bahnoptimierten Behälterauslauf 90 in der Auslaufvorrichtung. Hier umfasst die Schwappschutzvorrichtung einen von der Kreisbahn abweichenden Auslaufweg der Behälter 91 in der Auslaufvorrichtung, insbesondere mit einem von einem Übergabepunkt zwischen Behandlungsstation und Auslaufvorrichtung in tangentialer Richtung verlaufenden Teilstücks des Auslaufwegs. Auf diese Weise wird vermieden, dass die in der Behandlungsstation wirkende Zentripetalkraft bei der Übergabe momentan in eine entgegengesetzte Zentripetalkraft im Auslaufstern umgesetzt wird, wodurch ein Schwappen verringert wird. Besonders bevorzugt ist ein allmählicher Übergang von der Krümmung der Kreisbahn in der Behandlungsstation in eine gegenläufige Krümmung des Auslaufwegs. Mit anderen Worten, der Auslaufweg verläuft nach dem Übergabepunkt noch teilweise mit einer Krümmungsrichtung wie vor bzw. bei der Übergabe.

Fig. 10 zeigt einen Mehrachsenauslaufstern 95. In dieser Ausführungsform ist eine derartige Schwappschutzvorrichtung mit bahnoptimiertem Behälterauslauf dadurch realisiert, dass die Schwappschutzvorrichtung weiterhin wenigstens einen um einen Drehpunkt drehbar angeordneten Halter 94 für den Behälter umfasst, wobei ein Abstand des gehalterten Behälters und des Drehpunkts variabel ist, insbesondere mittels eines längen- und eingeschränkt winkelveränderlichen Verbindungselements. Dies entspricht einem Mehrachsenauslaufstern 95 mit veränderlichem Radius welcher durch geeignete Schwenk-Kinematik auch vom Bahnradius relativ unabhängige Bahngeschwindigkeiten der Behälter zulässt.

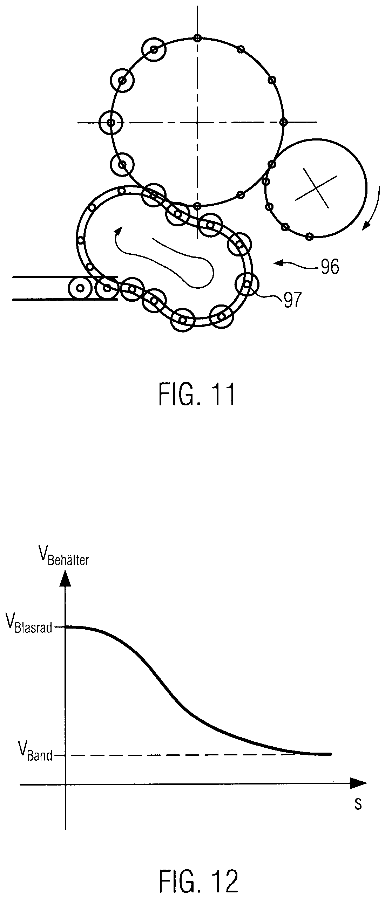

Fig. 11 zeigt ein erfindungsgemäßes Einzelschlittensystem 96. In dieser Ausführungsform umfasst die Auslaufvorrichtung mehrere Einzelschlitten 97 für die jeweilige Aufnahme eines Behälters, wobei die Einzelschlitten auf wenigstens einer Führungsschiene angeordnet sind und über einen Riemen oder eine Kette angetrieben werden. Idealerweise sind die Einzelschlitten nicht miteinander gekoppelt und die jeweiligen Schlittengeschwindigkeiten sind separat steuerbar. Auf diese Weise kann jeder Einzelschlitten einzeln angetrieben entlang der vorgegebenen Bahn fahren. Somit kann nicht nur der Bahnverlauf sondern auch der Geschwindigkeits- und Beschleunigungsverlauf angepasst und variabel sein. Auf diese Weise kann die auf die Flüssigkeit im Behälter wirkende Zentrifugalkraft, insbesondere deren Maximalwerte im Verlauf der Auslaufbahn, minimiert werden.

Fig. 12 zeigt ein Weg-Geschwindigkeitsdiagramm mit optimiertem Kurvenverlauf. Dabei wird die Geschwindigkeit des Behälters v_{Behälter} entlang des Wegs s der Bahn allmählich von der Geschwindigkeit v_{Blasrad} im Blasrad der Formfüllmaschine auf die Geschwindigkeit v_{Band} des Auslaufbades reduziert.

## Patentansprüche

1. Formfüllmaschine zum Ausformen und Füllen eines Kunststoffbehälters mit einer Flüssigkeit in einer Behandlungsstation, umfassend:
eine Schwappschutzvorrichtung (96), die zur Vermeidung von Überschwappen der Flüssigkeit aus dem Behälter beim Übergang des mit der Flüssigkeit gefüllten Behälters aus
einem Karussell
der Behandlungsstation der Formfüllmaschine in eine Auslaufvorrichtung, insbesondere einen Auslaufstern, aufgrund von Richtungsänderungen in der Bahn des Behälters, geeignet ist; **dadurch gekennzeichnet, dass** die Schwappschutzvorrichtung (96) einen von einer Kreisbahn abweichenden Auslaufweg (90) der Behälter in der Auslaufvorrichtung umfasst,
wobei die Auslaufvorrichtung mehrere Einzelschlitten (97) für die jeweilige Aufnahme eines Behälters umfasst, wobei die Einzelschlitten auf wenigstens einer Führungsschiene angeordnet sind, so dass jeder Einzelschlitten (97) entlang einer vorgegebenen und der Auslaufweg (90) bildenden Bahn fahrbar ist.

2. Formfüllmaschine nach Anspruch 1, wobei
der von der Kreisbahn abweichende Auslaufweg (90) der Behälter in der Auslaufvorrichtung ein von einem Übergabepunkt zwischen Behandlungsstation und Auslaufvorrichtung in tangentialer Richtung verlaufendes Teilstücks des Auslaufwegs oder einen allmählichen Übergang von der Krümmung der Kreisbahn in der Behandlungsstation in eine gegenläufige Krümmung des Auslaufwegs aufweist.

3. Formfüllmaschine nach Anspruch 1, wobei die Geschwindigkeiten der Einzelschlitten jeweils separat steuerbar sind.

## Claims

1. Form-filling machine to mold and fill a plastic container with a liquid in a treatment station, comprising:
a slop-over protection device (96) that is adapted to prevent the liquid from slopping out of the container due to direction changes in the path of the container during the transition of the container filled with the liquid from a carousel of the treatment station of the form-filling machine into a discharge unit, in particular a discharge star wheel;
**characterized in that** the slop-over protection device (96) comprises a discharge path (90) of the containers in the discharge unit, which deviates from a circular path,
wherein the discharge unit comprises several single carriages (97) for the respective input of a container, wherein the single carriages are arranged on at least one guiding rail, such that each single carriage (97) can move along a predefined path which forms the discharge path (90).

2. Form-filling machine according to claim 1 wherein the discharge path (90) of the containers in the discharge unit, which deviates from the circular path comprises a section of the discharge path that extends from a transfer point between the treatment station and the discharge unit in a tangential direction or a gradual transition from the curvature of the circular path in the treatment station to an opposite curvature of the discharge path.

3. Form-filling machine according to claim 1 wherein the speed of each single carriage is controllable in a separate way.

## Revendications

1. Machine de formage et de remplissage pour assurer le formage et le remplissage de contenants plastiques avec un liquide, dans un poste de traitement, comprenant :
un dispositif anti-débordement (96), qui est adapté à empêcher un débordement du liquide hors du contenant lors du transfert du contenant rempli du liquide à partir d'un carrousel du poste de traitement de la machine de formage et de remplissage à un dispositif de sortie d'évacuation, notamment une étoile de sortie d'évacuation, en raison de changements de direction dans la trajectoire du contenant,
**caractérisée en ce que** le dispositif anti-débordement (96) comprend un chemin de sortie d'évacuation (90) des contenants, différent d'une trajectoire circulaire, dans le dispositif de sortie d'évacuation, le dispositif de sortie d'évacuation comprenant plusieurs chariots individuels (97), chacun pour l'accueil respectif d'un contenant, les chariots individuels étant agencés sur au moins une glissière de guidage, de sorte que chaque chariot individuel (97) peut se déplacer le long d'une trajectoire prédéterminée et formant le chemin de sortie d'évacuation (90).

2. Machine de formage et de remplissage selon la revendication 1, dans laquelle le chemin de sortie d'évacuation (90) des contenants, différent d'une trajectoire circulaire, dans le dispositif de sortie d'évacuation, présente un secteur du chemin de sortie d'évacuation s'étendant dans une direction tangentielle d'un point de transfert entre le poste de traitement et le dispositif de sortie d'évacuation, ou bien une transition progressive de la courbure de la trajectoire circulaire dans le poste de traitement, à une courbure de sens opposé du chemin de sortie d'évacuation.

3. Machine de formage et de remplissage selon la revendication 1, dans laquelle les vitesses des chariots individuels peuvent être commandés respectivement de manière séparée.
